# EUROPÄISCHE PATENTSCHRIFT

(11) **EP 3 582 148 B1**
(45) Veröffentlichungstag und Bekanntmachung des Hinweises auf die Patenterteilung: **21.07.2021**
(21) Anmeldenummer: 19184234.3
(22) Anmeldetag: 21.07.2015
(51) Int. Cl.: G06K 19/077

(54) **DOKUMENT MIT SENSORMITTELN**
DOCUMENT WITH SENSOR MEANS
DOCUMENT POURVU DE MOYENS DE DÉTECTION

(30) Priorität: 29.07.2014 DE 102014110694
(43) Veröffentlichungstag der Anmeldung: 18.12.2019
(62) Teilanmeldung aus: 15741167.9
(73) Patentinhaber: Bundesdruckerei GmbH, 10969 Berlin (DE)
(72) Erfinder: FRITZE, Frank, 12437 Berlin (DE); FISCHER, Jörg, 13053 Berlin (DE); HILLE, Jakob, 14199 Berlin (DE)
(74) Vertreter: Richardt Patentanwälte PartG mbB

(56) Entgegenhaltungen:
- WO-A1-2010/037361
- DE-A1-102006 027 253
- US-A1- 2006 113 381

## Beschreibung

Die Erfindung betrifft ein Dokument mit Sensormitteln, mindestens einer Antenne, zwei getrennt voneinander arbeitenden Prozessoren, Speichermitteln und einem Schalter sowie ein Verfahren zur Initialisierung eines solchen Dokuments und ein Zugangskontrollsystem, welches ein solches Dokument sowie ein Lesegerät und eine Zugangskontrollvorrichtung umfasst.

Die vorliegende Patentanmeldung ist eine Teilanmeldung zur Stammanmeldung PCT/EP2015/066632, deren Offenbarungsgehalt vollumfänglich zum Gegenstand der vorliegenden Teilanmeldung gemacht wird.

Im Stand der Technik sind eine Vielzahl von Dokumenten zur Identifikation bzw. Authentifizierung eines Dokumenteninhabers bekannt. Prominente Beispiele hierfür sind beispielsweise Personalausweise und Reisepässe, aber auch Zugangskarten, welche einer bestimmten Person beispielsweise den Zugang zu einem Sicherheitsbereich ermöglichen sollen. Gerade bei dem Beispiel der Zugangskarten besteht jedoch im Stand der Technik das Problem, dass eine Zugangskarte nicht zwingend nur von der Person verwendet werden kann, für die die Zugangskarte vorgesehen ist. So kann beispielsweise jede fremde Person eine gefundene Zugangskarte nutzen, um sich Zutritt zu einem gesperrten Bereich zu verschaffen.

Eine Lösungsmöglichkeit hierfür besteht beispielsweise in der Verwendung eines zusätzlichen Authentifizierungsprozesses in dem von dem Kartenbenutzer ein bestimmtes Sicherheitsattribut, beispielsweise eine PIN abgefragt wird. Alternativ oder zusätzlich kann auch eine Identifikation des Kartenbenutzers vorgesehen sein, wobei nach Identifikation des Kartennutzers überprüft wird, ob es sich um den autorisierten Karteninhaber handelt.

Zur Identifikation und Authentifizierung eines Kartenbenutzers sind im Stand der Technik biometrische Verfahren und Technologien bekannt. Beispielsweise eignen sich Fingerabdrucksensoren gut für sichere Identifikationsprozesse und werden bereits weltweit eingesetzt.

Das Dokument US 2006/113381 A1 beschreibt eine batterielose, kontakt- und kontaktlose Smartcard mit integriertem biometrischen Fingerabdrucksensor, Vorlagenspeicher und Prozessor zur Authentifizierung von Benutzern. Die biometrische Authentifizierungsverarbeitungsschaltungsanordnung der Karte erhält ihre Anfangsleistung von Kontakt-Smartcard-Lesegeräten, während sie eine Authentifizierung beim Einführen der Karte durchführt.

Das Dokument EP 0849703 A2 beschreibt einen mobilen, maschinell lesbaren Informationsträger, welcher ohne interne Energiequelle kontaktlos mit Hilfe hochfrequenter elektromagnetischer Wellen zwecks Energie- und bidirektionaler Informationsübertragung mit einem externen Gerät zusammenwirkt. Der Informationsträger enthält eine Antenne und ein nachgeschaltetes Interface, welches ausgangsseitig mittels Energieflußleitung über ein Spannungserzeugungssystem auf Verarbeitungssysteme sowie mittels Informationsflußleitung auf die Verarbeitungssysteme geführt ist, die als Modulations-/Demodulationsschaltung, Eingabe-/Ausgabe-Steuerschaltung, Steuerung/Prozessor, oder Speicherschaltungen ausgeführt sind.

Der vorliegenden Erfindung liegt nun die Aufgabe zugrunde, das eingangs beschriebene Problem einer widerrechtlichen Nutzung eines Dokuments zu verhindern.

Diese Aufgabe wird jeweils mit den Merkmalen der unabhängigen Patentansprüche gelöst. Ausführungsformen der Erfindung sind in den abhängigen Patentansprüchen angegeben. Sofern nicht ausdrücklich Gegenteiliges zum Ausdruck gebracht wird, können Ausführungsformen der Erfindung frei miteinander kombiniert werden.

Unter einem "Dokument" wird hier insbesondere ein tragbares elektronisches Gerät verstanden, welches zumindest einen Datenspeicher zur Speicherung eines Attributs und eine Kommunikationsschnittstelle zum Auslesen des Attributs aufweist. Vorzugsweise hat das Dokument einen gesicherten Speicherbereich zur Speicherung des zumindest einen Attributs, um zu verhindern, dass das in dem Speicherbereich gespeicherte Attribut in unerlaubter Weise verändert oder ohne die dafür erforderliche Berechtigung ausgelesen wird.

Ferner wird unter einem "Dokument" ein Wert- oder Sicherheitsdokument, insbesondere ein Hochsicherheitsdokument verstanden, welches papier- und/oder kunststoffbasiert sein kann, wie beispielsweise Ausweisdokumente, insbesondere Reisepässe, Personalausweise, Visa sowie Führerscheine, Fahrzeugscheine, Firmenausweise, Gesundheitskarten oder andere ID-Dokumente sowie Chipkarten, Zahlungsmittel, Bankkarten und Kreditkarten, Frachtbriefe oder sonstige Berechtigungsnachweise. In diese kann nach Ausführungsformen ein Datenspeicher zur Speicherung des zumindest einen Attributs integriert sein.

In einem Aspekt betrifft die Erfindung ein Dokument, welches Sensormittel, mindestens eine Antenne, einen ersten Prozessor, einen zweiten Prozessor, Speichermittel und einen Schalter umfasst. Dabei ist der erste Prozessor dazu ausgebildet, über die Antenne mit einem externen Lesegerät zu kommunizieren.

Erfindungsgemäß ist der Schalter dazu ausgebildet, die Antenne zwischen einem ersten stabilen Zustand, in dem eine Kommunikation zwischen erstem Prozessor und externem Lesegerät verhindert wird, und einem zweiten astabilen Zustand, in dem eine Kommunikation zwischen erstem Prozessor und externem Lesegerät möglich ist, umzuschalten. Dabei stellt der erste Zustand des Schalters dessen Grundzustand. Wird der Schalter nicht betätigt, geht er automatisch in seinen Grundzustand über. Ein solcher Schalter kann sowohl durch eine entsprechende elektronische Schaltung, als auch über eine logische Schaltung mit einer entsprechenden Programmierung realisiert sein.

Die Sensormittel des erfindungsgemäßen Dokuments sind dazu ausgebildet, ein erstes Identifikationsmerkmal eines Benutzers des Dokuments zu erfassen. Der zweite Prozessor ist dazu ausgebildet, das erfasste erste Identifikationsmerkmal mit einem zweiten Identifikationsmerkmal zu vergleichen, welches in dem Speichermittel gespeichert ist. Bei Übereinstimmung zwischen dem ersten Identifikationsmerkmal und dem zweiten Identifikationsmerkmal ist der zweite Prozessor ferner dazu ausgebildet, den Schalter in den zweiten Zustand zu schalten, sodass eine Kommunikation zwischen dem ersten Prozessor und dem externen Lesegerät unter Verwendung der Antenne möglich ist.

Ausführungsformen der Erfindung könnten den Vorteil haben, dass eine Kommunikation zwischen dem ersten Prozessor und einem externen Lesegerät ausschließlich dann möglich ist, wenn sich ein Benutzer durch Erfassung eines Identifikationsmerkmals durch einen Sensor gegenüber dem Dokument identifiziert hat. Solange keine erfolgreiche Identifikation eines Dokumentenbenutzers erfolgt ist, wird eine Kommunikation zwischen dem ersten Prozessor und dem externen Lesegerät wirkungsvoll unterbunden, da keine aktive Kommunikationsschnittstelle für den ersten Prozessor vorhanden ist. Dabei kann die Kommunikationsschnittstelle - in diesem Fall die Antenne - ausschließlich durch eine erfolgreiche Authentifizierung des Dokumentenbenutzers aktiviert werden.

Um die Kommunikation zwischen erstem Prozessor und einem Lesegerät zu unterbinden, kann beispielsweise die Antenne durch den Schalter in dessen erstem Zustand kurzgeschlossen sein oder vollständig von dem ersten Prozessor entkoppelt werden.

Ferner ist es bei dem erfindungsgemäßen Dokument vorgesehen, dass sowohl die Erfassung des Identifikationsmerkmals als auch die Überprüfung des Identifikationsmerkmals auf ein und demselben Dokument vollzogen wird (match-on-card). Da bis zu dem Zeitpunkt, in dem der Vergleich zwischen dem erfassten Identifikationsmerkmal und dem gespeicherten Identifikationsmerkmal abgeschlossen ist, eine Kommunikation des Dokuments mit einem externen Lesegerät ausgeschlossen ist, gibt es keine Möglichkeit, den Identifikationsprozess zu beeinflussen, beispielsweise indem dem zweiten Prozessor oder dem Schalter eine erfolgreiche Identifikation des Dokumentennutzers vorgetäuscht wird.

Die zuvor beschriebene Ausführungsform der Erfindung ist insbesondere für eine Anwendung in Hochsicherheitskarten interessant, da eine solche Sicherheitskarte, welche beispielsweise als Zugangskarte ausgelegt ist, mit einfachen Mitteln zu einem erfindungsgemäßen Dokument umgerüstet werden kann. So ist es lediglich notwendig, die in einem Hochsicherheitsdokument vorhandene Antenne mit einem Schalter sowie der erfindungsgemäßen Identifikationsschnittstelle zu versehen. Dies wird dadurch möglich, dass die gesamte Identitätsprüfung des Dokumentennutzers nicht auf dem ersten Prozessor abläuft, welcher beispielsweise Teil eines kryptographischen Zugangskontrollverfahrens ist, sondern auf einem separaten zweiten Prozessor.

Es sei an dieser Stelle angemerkt, dass es sich bei dem ersten und dem zweiten Prozessor um zwei voneinander getrennt arbeitende Prozessoren handelt. Dabei kann jedoch sowohl der erste als auch der zweite Prozessor eine Vielzahl von Prozessorkernen beinhalten. Es findet jedoch keine direkte Kommunikation zwischen dem ersten und dem zweiten Prozessor statt.

Der Schalter, welcher die Antenne erst freigibt, sobald das Identifikationsmerkmal des Benutzers des Dokuments erfolgreich überprüft wurde, kann ein elektrischer Schalter wie ein Reed Relais oder ein elektrisches Relais sein, oder bevorzugt ein elektronischer Schalter, wie beispielsweise ein Transistor, ein bipolarer Transistor oder ein Feldeffekttransistor.

Bei dem Lesegerät kann es sich allgemein um ein Terminal handeln, welches über eine drahtlose oder drahtgebundene Schnittstelle auf den ersten Prozessor zugreift. Dabei ist der Zugriff nicht ausschließlich auf einen Lesevorgang beschränkt, sondern kann auch einen Schreibvorgang beinhalten.

Die Antenne des Dokuments steht hier stellvertretend sowohl für eine Schnittstelle zur kontaktlosen Kommunikation, als auch für eine Schnittstelle zur kontaktbehafteten Kommunikation.

Nach Ausführungsformen der Erfindung kann es sich bei dem Identifikationsmerkmal um ein biometrisches Merkmal des Benutzers handeln. Dabei kann es sich nach einer bevorzugten Ausführungsform bei dem biometrischen Merkmal um den Fingerabdruck des Benutzers handeln. Weitere mögliche biometrische Merkmale, welche im Rahmen der hier beschriebenen Erfindung genutzt werden können, sind Irisscans, Stimmabgleiche oder Ähnliches. Ferner kann es sich bei dem Identifikationsmerkmal auch um ein Passwort, wie beispielsweise einen Zahlencode, handeln.

Ausführungsformen der Erfindung könnten den Vorteil haben, dass insbesondere bei Verwendung des Fingerabdrucks als Identifikationsmerkmal als Sensormittel Fingerabdruckscanner genutzt werden können, welche im Stand der Technik gut bekannt und sehr kompakt herstellbar sind. Dabei vereinfacht die Verwendung eines Fingerabdrucksensors die Handhabung des erfindungsgemäßen Dokuments, da bei einem Authentifizierungsvorgang üblicherweise das Dokument von dem Benutzer des Dokuments in den Händen gehalten wird. Somit kann eine Identitätsprüfung des Dokumentenbenutzers in dem Moment erfolgen, in dem der Benutzer das Dokument in die Hand nimmt.

Nach einer Ausführungsform der Erfindung ist der zweite Prozessor dazu ausgebildet, bei Übereinstimmung des ersten Identifikationsmerkmals und des zweiten Identifikationsmerkmals den Schalter so lange in dem zweiten Zustand zu halten wie das Identifikationsmerkmal erfasst wird. Es findet also nach dieser Ausführungsform eine dauerhafte Erfassung eines Identifikationsmerkmals statt.

Ausführungsformen der Erfindung könnten den Vorteil haben, dass insbesondere bei Verwendung eines Fingerabdrucks als Identifikationsmerkmal das Dokument nur solange nutzbar bleibt, wie es von dem Benutzer, für welchen das Dokument vorgesehen ist, in dessen Händen gehalten wird. Somit wird ein Dokumentenmissbrauch durch einen nicht autorisierten Benutzer deutlich erschwert, da ein Zugriff auf den ersten Prozessor des Dokuments in dem Moment unterbunden wird, in dem der autorisierte Benutzer das Dokument nicht mehr in der Hand hält.

Nach einer alternativen Ausführungsform ist der zweite Prozessor dazu ausgebildet, nach Feststellung der Übereinstimmung des ersten Identifikationsmerkmals und des zweiten Identifikationsmerkmals den Schalter für eine vordefinierte Zeitspanne in dem zweiten Zustand zu halten.

Ausführungsformen der Erfindung könnten den Vorteil haben, dass nach erfolgter Identifizierung des Dokumentenbenutzers das Dokument von dem Benutzer nicht zwingend in den Händen gehalten werden muss, sodass der Dokumentenbenutzer beispielsweise nach Freischaltung eines Computerterminals das Dokument zur Seite legen kann und beide Hände für Arbeiten an dem Computerterminal frei hat. Dabei kann die Zeitspanne für die die Antenne des Dokuments in dem zweiten Zustand gehalten wird, so angepasst werden, dass zwar beispielsweise Arbeiten an einem Computerterminal durchgeführt werden können, jedoch ein Missbrauch des Dokuments aufgrund einer zu langen Benutzungszeitspanne vermieden wird.

Nach einer Ausführungsform der Erfindung umfasst das Dokument ferner eine Batterie, wobei die Batterie dazu ausgebildet ist, den zweiten Prozessor und die Sensormittel mit Energie zu versorgen. Bei der Batterie kann es sich beispielsweise um eine wiederaufladbare Batterie, beispielsweise eine Folienbatterie, handeln.

Ausführungsformen der Erfindung könnten den Vorteil haben, dass der zweite Prozessor und die Sensormittel auch dann mit Energie versorgt werden, wenn die Antenne des Dokuments sich in dem ersten Zustand befindet, in dem eine Energieeinkopplung von einem externen Gerät nicht möglich ist.

Nach einer weiteren Ausführungsform kann das Dokument ferner eine Kontaktschnittstelle umfassen, wobei die Kontaktschnittstelle dazu ausgebildet ist, den zweiten Prozessor und die Sensormittel mit Energie zu versorgen. Dabei ist festzuhalten, dass die Verwendung einer Batterie und die Verwendung einer Kontaktschnittstelle sich nicht gegenseitig ausschließen.

Ausführungsformen könnten den Vorteil haben, dass das Dokument durch die Kontaktschnittstelle genau dann mit Energie versorgt wird, wenn das Dokument beispielsweise an ein entsprechend gestaltetes Lesegerät gehalten wird. In diesem Fall könnte auf eine Batterie verzichtet werden, wodurch das Dokument insgesamt kompakter gestaltet werden kann. Ferner kann die Kontaktschnittstelle auch genutzt werden, um eine eventuell in dem Dokument vorhandene Batterie während des Kontakts mit einem Lesegerät wieder aufzuladen.

Nach einer weiteren Ausführungsform umfasst das Dokument ein Aktivierungselement, wobei das Aktivierungselement dazu ausgebildet ist, bei Betätigung die Energieversorgung des zweiten Prozessors und der Sensormittel einzuschalten. Beispielsweise kann es sich bei einem solchen Aktivierungselement um einen Druckschalter handeln.

Ausführungsformen der Erfindung könnten den Vorteil haben, dass beispielsweise bei Verwendung eines Fingerabdrucks als Identifikationsmerkmal der Fingerabdruckscanner durch einen Druckschalter erst dann mit Energie versorgt und damit aktiviert wird, wenn der Benutzer des Dokuments seinen Finger auf das Dokument drückt. Somit kann die Lebensdauer einer eventuell verwendeten Batterie verlängert werden, da die Batterie nur dann beansprucht wird, wenn auch tatsächlich ein Identifikationsvorgang vorgesehen ist. Alternativ könnte das Aktivierungselement auch eine fotosensitive Zelle umfassen, sodass die Sensormittel und der zweite Prozessor in dem Moment eingeschaltet werden, in dem das Dokument beispielsweise aus einer lichtdichten Hülle, wie beispielsweise einem Schutzbehältnis entnommen werden.

Nach einer Ausführungsform der Erfindung weist der Dokumentenkörper des Dokuments mindestens eine Abbildung eines optischen Identifikationsmerkmals des Benutzers auf. Beispielsweise kann vorgesehen sein, dass der Dokumentenkörper mit einem Konterfei bedruckt ist.

Ausführungsformen der Erfindung könnten den Vorteil haben, dass neben einer Überprüfung des Identifikationsmerkmals mittels des zweiten Prozessors und der Sensormittel auch beispielsweise durch Sicherheitspersonal eine Identitätsprüfung des Dokumentenbenutzers anhand des optischen Identifikationsmerkmals, welches auf dem Dokument abgebildet ist, vorgenommen werden kann.

Nach einer weiteren Ausführungsform der Erfindung ist der Dokumentenkörper des Dokuments mehrschichtig aufgebaut, wobei die Schichten aus Papier und/oder Kunststoff bestehen. Ferner ist im dem Dokumentenkörper nach einer Ausführungsform der Erfindung eine Ausnehmung zur Aufnahme der Sensormittel vorgesehen. So kann beispielsweise durch den Kunststoff ein flexibles und robustes Dokument bereitgestellt werden, wobei die Papierschichten beispielsweise so ausgeführt sein können, dass das Dokument von einem Benutzer mit einer Unterschrift signiert werden kann. Dabei kann die Schaltelektronik bestehend aus dem ersten Prozessor, dem zweiten Prozessor, den Speichermitteln und der Antenne sowie Leiterbahnen zwischen den Schichten des Dokumentenkörpers einlaminiert werden. Durch die Ausnehmung in dem Dokumentenkörper kann ferner das Sensormittel formschlüssig in dem Dokument aufgenommen werden um die Haptik des Dokuments zu verbessern.

Nach einer weiteren Ausführungsform der Erfindung ist die Antenne dazu ausgebildet, eine von dem Lesegerät empfangene elektromagnetische Strahlung in elektrische Energie umzusetzen, wobei die Antenne ferner dazu ausgebildet ist, den ersten Prozessor mit elektrischer Energie zu versorgen, wenn der Schalter im zweiten Zustand ist.

Dies könnte den Vorteil haben, dass der erste Prozessor ausschließlich dann angesteuert werden kann, wenn die Antenne in den zweiten Zustand geschaltet wurde und zwar unabhängig davon, ob über die Antenne oder andere Schnittstellen ein Zugriff auf den ersten Prozessor erfolgen soll. Da die Antenne nur dann in den zweiten Zustand geschaltet wird, wenn der Benutzer des Dokuments anhand des Identifikationsmerkmals eindeutig festgestellt wurde, kann ein Missbrauch des ersten Prozessors effektiv ausgeschlossen werden.

Nach einer weiteren Ausführungsform der Erfindung ist die Antenne ferner dazu ausgebildet, eine Batterie, welche dazu ausgebildet ist, den zweiten Prozessor und die Sensormittel mit Energie zu versorgen, mit elektrischer Energie aufzuladen, wenn der Schalter im zweiten Zustand ist.

Nach einer weiteren Ausführungsform der Erfindung beinhaltet das Dokument ein zweites Speichermittel mit einem geschützten Speicherbereich zur Speicherung mindestens eines Attributs, wobei der erste Prozessor dem Lesegerät das mindestens eine Attribut ausschließlich nach erfolgreicher Überprüfung einer kryptografischen Zugangsbedingung über die Antenne übermittelt. Bei der kryptografischen Zugangsbedingung kann es sich beispielsweise um ein Challenge-Response-Verfahren, die Abfrage einer PIN oder eines Berechtigungszertifikats handeln. Jedoch sind die kryptografischen Zugangsbedingungen im Sinne der vorliegenden Erfindung nicht auf diese Möglichkeiten beschränkt.

In einem weiteren Aspekt betrifft die Erfindung ein Verfahren zur Initialisierung eines Dokuments nach einem der vorhergehenden Ansprüche mit den folgenden Schritten:
In einem ersten Schritt wird die Antenne des Dokuments in den zweiten Zustand geschaltet. Dies kann beispielsweise nach Herstellung des Dokuments erfolgen, sodass das Dokument in einem Auslieferungszustand durch ein externes Gerät adressiert werden kann.

In einem zweiten Schritt wird der erste Prozessor durch das Lesegerät konfiguriert. Hierzu kann das Lesegerät über die Antenne auf den ersten Prozessor zugreifen. Sobald die Konfiguration des ersten Prozessors abgeschlossen ist, wird die Antenne in den ersten Zustand geschaltet.

In einem nächsten Schritt wird ein Identifikationsmerkmal des Benutzers des Dokuments durch die Sensormittel erfasst. Dieses erfasste Identifikationsmerkmal wird dann als zweites Identifikationsmerkmal in den Speichermitteln des Dokuments durch den zweiten Prozessor gespeichert.

Das zuvor beschriebene Verfahren zur Initialisierung kann nach einer weiteren Ausführungsform der Erfindung auch so ausgeführt sein, dass in einem ersten Schritt ein Identifikationsmerkmal des Benutzers des Dokuments durch die Sensormittel erfasst wird. Anschließend wird das erfasste Identifikationsmerkmal als zweites Identifikationsmerkmal in den Speichermitteln durch den zweiten Prozessor gespeichert.

Nachdem das zweite Identifikationsmerkmal in den Speichermitteln abgelegt wurde, erfassen die Sensormittel ein erstes Identifikationsmerkmal des Benutzers des Dokuments. Dieses erste Identifikationsmerkmal wird dann durch den zweiten Prozessor mit dem zweiten Identifikationsmerkmal verglichen. Bei Übereinstimmung zwischen dem ersten Identifikationsmerkmal und dem zweiten Identifikationsmerkmal wird dann der Schalter durch den zweiten Prozessor in den zweiten Zustand geschaltet, und der erste Prozessor durch das Lesegerät konfiguriert. Abschließend wird die Antenne wieder in den ersten Zustand geschaltet.

Der Unterschied zu dem ersten Verfahren zur Initialisierung des Dokuments besteht also darin, dass zunächst das Dokument auf einen Benutzer registriert wird, indem dessen Identifikationsmerkmal hinterlegt wird und erst anschließend nach neuerlicher Überprüfung der Identität des Dokumentenbenutzers die Antenne eingeschaltet wird, sodass der erste Prozessor konfiguriert werden kann.

Beispielsweise kann das erstgenannte Verfahren genutzt werden, wenn eine große Zahl von Dokumenten mit gleicher Funktionalität erzeugt werden soll. Nachdem die Dokumente hergestellt und die jeweiligen ersten Prozessoren entsprechend der gewünschten Funktionalität eingerichtet wurden, kann jedes der Dokumente auf einen anderen Benutzer registriert werden. Das zweite Verfahren zur Initialisierung kann hingegen dann Anwendung finden, wenn die Funktionalitäten eines Dokuments zunächst nicht festgelegt werden sollen, sondern das Dokument nur einem Benutzer zugeordnet wird. Der Benutzer kann dann beispielsweise selbst entscheiden, welche Funktionalitäten das ihm zugeordnete Dokument aufweisen soll. Somit wäre eine Individualisierung der Funktionalitäten des Dokuments möglich. Allerdings ist es nicht grundsätzlich ausgeschlossen, dass ein Dokument, welches nach dem erstgenannten Verfahren initialisiert wurde im Nachgang noch um Funktionalitäten erweitert oder eingeschränkt wird.

In einem weiteren Aspekt betrifft die Erfindung ein Zugangskontrollsystem, welches mindestens ein Dokument wie zuvor beschrieben sowie mindestens ein Lesegerät und eine Zugangskontrollvorrichtung umfasst. Dabei ist das Lesegerät dazu ausgebildet mit dem Dokument zu kommunizieren, wobei das Dokument nach erfolgreicher Überprüfung einer kryptografischen Zugangsbedingung dem Lesegerät das mindestens eine Attribut übermittelt. Das Lesegerät ist dabei dazu ausgebildet, das von dem Dokument empfangene Attribut mit einem Referenzattribut zu vergleichen, wobei das Lesegerät ferner dazu ausgebildet ist, bei Übereinstimmung des empfangenen Attributs mit dem Referenzattribut die Zugangskontrollvorrichtung in einen Freigabezustand zu schalten. Beispielsweise kann es sich bei der Zugangskontrollvorrichtung um eine Schließvorrichtung einer Tür oder um ein Computerterminal handeln.

Im Folgenden werden bevorzugt Ausführungsformen der Erfindung anhand der Zeichnungen näher erläutert. Es zeigen:
- Figur 1: ein Blockdiagramm eines erfindungsgemäßen Dokuments,
- Figur 2: eine Skizze eines erfindungsgemäßen Dokuments,
- Figur 3: ein Flussdiagramm für einen Initialisierungsvorgang eines erfindungsgemäßen Dokuments und
- Figur 4: ein Flussdiagramm für einen alternativen Initialisierungsvorgang eines erfindungsgemäßen Dokuments.

Im Folgenden werden einander ähnliche Dokumente mit gleichen Bezugszeichen gekennzeichnet.

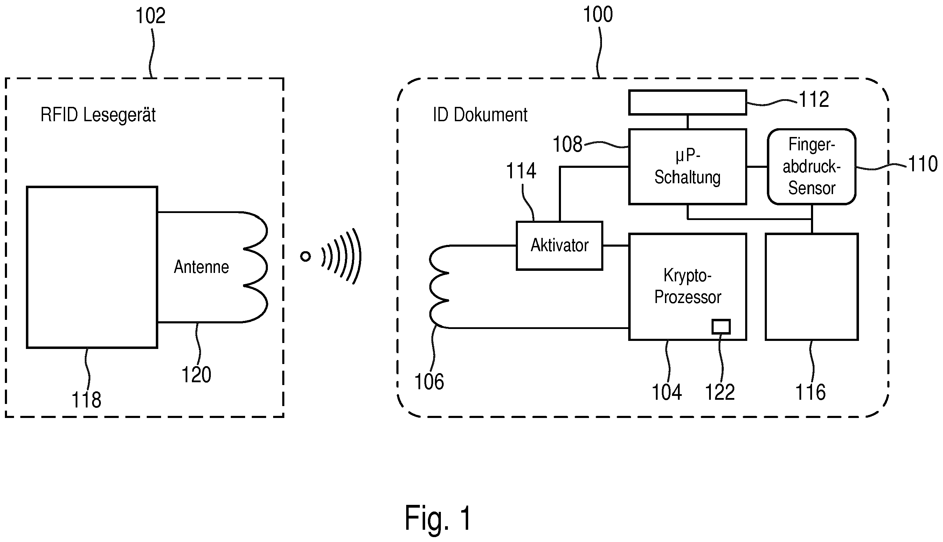

Die Figur 1 zeigt ein Blockdiagramm eines erfindungsgemäßen Dokuments 100 in Kombination mit einem Lesegerät 102. Das Dokument 100 umfasst einen Kryptoprozessor 104, welcher mittels einer Antenne 106 zur drahtlosen Kommunikation mit dem Lesegerät 102 ausgebildet ist. Beispielsweise kann es sich bei dem Kryptoprozessor 104 um einen MIFARE-Transponder handeln. Ferner umfasst das Dokument 100 eine Mikroprozessorschaltung 108, welche mit einem Fingerabdrucksensor 110, einem Speichermittel 112 und einem Aktivator 114 verbunden ist. Bei dem Aktivator 114 kann es sich beispielsweise um einen elektrischen Schalter wie ein Reed-Relais, ein elektrisches Relais oder bevorzugt einen elektronischen Schalter, wie beispielsweise einen Transistor, einen bipolaren Transistor oder ein Feldeffekttransistor handeln.

Weiter umfasst das Dokument 100 eine Energiequelle 116, welche zur Energieversorgung der Mikroprozessorschaltung 108 und des Fingerabdrucksensors 110 ausgebildet ist. Bei der Energiequelle 116 kann es sich beispielsweise um eine Batterie oder eine Vorrichtung zum "Energieernten" (energy harvesting) handeln. Hierzu können beispielsweise piezoelektrische Kristalle, thermoelektrische Generatoren oder Ähnliches verwendet werden.

Das Lesegerät 102 umfasst eine kryptografische Schaltung 118, welche dazu ausgebildet ist, mittels einer Antenne 120 mit dem Kryptoprozessor 104 des Dokuments 100 zu kommunizieren. Beispielsweise kann es sich bei dem Lesegerät 102 um ein RIFD-Lesegerät handeln. Dabei kann beispielsweise die Kommunikation zwischen dem Lesegerät 102 und dem Dokument 100 entsprechend der Norm ISO 14443 drahtlos mit einer Frequenz von 13,56 MHz erfolgen.

Das Lesegerät 102 kann beispielsweise Teil eines Zugangskontrollsystems sein, wobei ein Benutzer mittels des Dokuments 100 eine Zugangskontrollvorrichtung in einen Freigabezustand schalten will. Hierzu ist in dem Kryptoprozessor 104 in einem geschützten Speicherbereich 122 ein Attribut hinterlegt, welches von dem Lesegerät 102 ausgelesen und mit einem Referenzattribut verglichen werden soll. Nur bei Übereinstimmung des aus dem geschützten Speicherbereich 122 ausgelesenen Attributs und dem in dem Lesegerät 102 hinterlegten Referenzattribut wird die Zugangskontrollvorrichtung in einen Freigabezustand geschaltet.

Um einen Missbrauch des Dokuments 100 durch eine nichtautorisierte Person zu verhindern, sind in dem Dokument 100 zusätzlich zu im Stand der Technik bekannten Sicherheitsdokumenten der Aktivator 114, die Schaltung 108, der Fingerabdrucksensor 110 und der Speicher 112 vorgesehen. Dabei befindet sich der Aktivator 114 bei Nichtbenutzung des Dokuments 100 zunächst in einem stabilen ersten Zustand, in dem eine Kommunikation zwischen dem Kryptoprozessor 104 und der kryptografischen Schaltung 118 eines Lesegeräts 102 über die Antenne 106 verhindert wird. Beispielsweise kann der Aktivator 114 hierzu die Antenne 106 kurzschließen oder vollständig von dem Kryptoprozessor 104 entkoppeln.

Will ein Benutzer mittels des Dokuments 100 die Zugangskontrollvorrichtung durch Auslesen des Attributs 122 mittels des Lesegeräts 102 in den Freigabezustand schalten, muss der Benutzer zunächst seinen Finger auf den Fingerabdrucksensor 110 des Dokuments 100 halten. Der Fingerabdrucksensor 110 erfasst dann den Fingerabdruck des Benutzers des Dokuments 100 und übermittelt den Fingerabdruck an die Mikroprozessorschaltung 108. Die Mikroprozessorschaltung 108 greift dann auf den Speicher 112 zu, um einen Referenzfingerabdruck des autorisierten Benutzers des Dokuments 100 abzurufen. Anschließend vergleicht die Mikroprozessorschaltung 108 den aus dem Speicher 112 abgerufenen Fingerabdruck mit dem durch den Fingerabdrucksensor 110 erfassten Fingerabdruck.

Stimmen die beiden Fingerabdrücke überein, steuert die Mikroprozessorschaltung 108 den Aktivator 114 an, sodass der Aktivator 114 die Antenne 106 in den zweiten Zustand schaltet. In diesem zweiten Zustand ist eine Kommunikation des Kryptoprozessors 104 mit der kryptografischen Schaltung 118 des Lesegeräts 102 möglich. Das Lesegerät 102 kann dann mit dem Dokument 100 eine kryptografische Authentifizierungsprozedur durchführen.

Wie zuvor bereits ausgeführt wurde, ist die Energiequelle 116 zur Energieversorgung der Mikroprozessorschaltung 108 und des Fingerabdrucksensors 110 vorgesehen. Um zu vermeiden, dass die Energiequelle 116 die Mikroprozessorschaltung 108 und den Fingerabdrucksensor 110 dauerhaft mit Energie versorgen muss, kann ein Schalter vorgesehen sein, durch dessen Betätigung die Energieversorgung der Mikroprozessorschaltung 108 und des Fingerabdrucksensors 110 aktiviert wird. Beispielsweise kann es sich hierbei um einen Druckschalter handeln, welcher in dem Fingerabdrucksensor 110 integriert ist. In diesem Fall würde die Mikroprozessorschaltung 108 und der Fingerabdrucksensor 110 in dem Moment eingeschaltet, in dem ein Benutzer des Dokuments 100 sich gegenüber dem Dokument 100 identifizieren will, indem er mit seinem Finger auf den Fingerabdrucksensor 110 drückt.

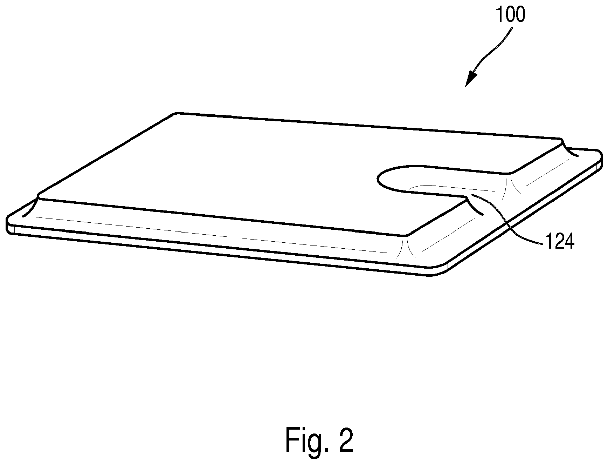

Die Figur 2 ist eine schematische Darstellung eines Dokuments 100. Dabei ist der Dokumentenkörper beispielsweise mehrschichtig durch Laminieren aufgebaut, wobei in dem Dokumentenkörper eine Ausnehmung 124 vorgesehen ist. In der Ausnehmung 124 ist der Fingerabdrucksensor 110 des Dokuments 100 eingebettet um die Haptik des Dokuments 100 zu verbessern. Der Dokumentenkörper des Dokuments 100 kann beispielsweise derart ausgeführt sein, dass die Außenabmessungen des Dokuments 100 der Norm ISO 7810 mit einer Dicke von 0,76 mm entsprechen, wobei jedoch ein mittlerer Teil des Dokuments 100 dicker ausgeführt sein kann, um die Elektronik des Dokuments 100 aufzunehmen. Der Dokumentenkörper kann beispielsweise aus Polycarbonat hergestellt sein und beispielsweise durch ein Druckverfahren mit einem persönlichen optischen Merkmal des Benutzers des Dokuments 100 personalisiert sein. Beispielsweise kann das Dokument 100 mittels Lasergravur oder eines Inkjetverfahrens mit einem Konterfei des Dokumentenbenutzers bedruckt sein.

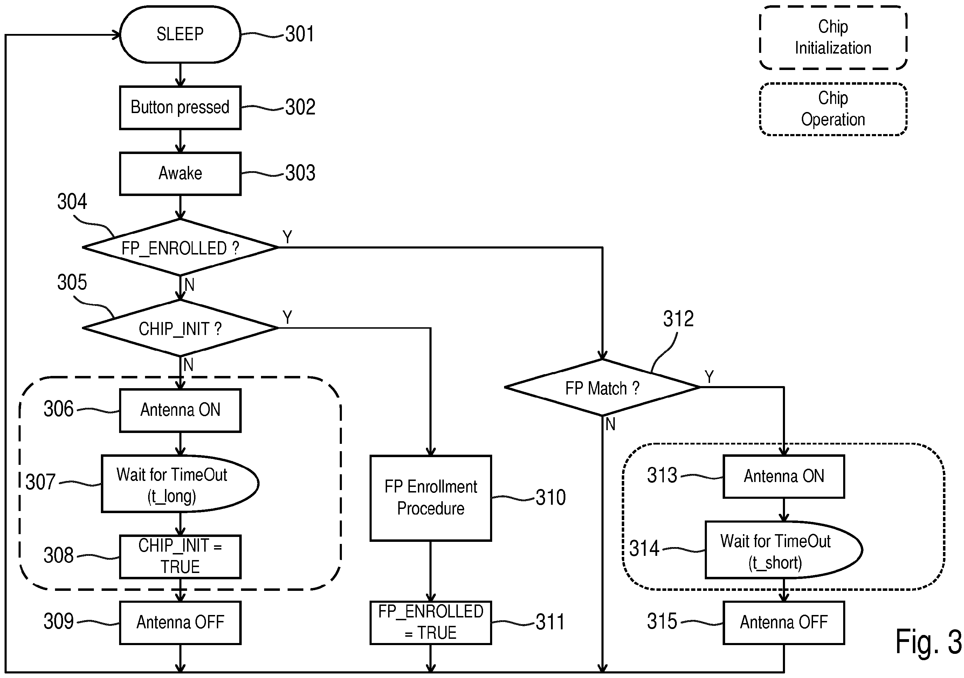

Die Figur 3 ist ein Flussdiagramm eines Initialisierungsvorgangs für ein erfindungsgemäßes Dokument 100. Dabei befindet sich das Dokument 100 zunächst in einem Ruhezustand (SLEEP) 301. Wird nun beispielsweise durch Betätigung eines Druckschalters 302 das Dokument 100 aktiviert 303, wird durch den Prozessor 108 zunächst überprüft, ob das Dokument 100 bereits ein Benutzer zugeordnet ist (FP_ENROLLED?) 304. Ist dies nicht der Fall, überprüft der Prozessor 108 weiter, ob der Kryptoprozessor 104 bereits konfiguriert wurde (CHIP_INIT?) 305. Ist dies ebenfalls nicht der Fall, steuert der Prozessor 108 den Aktivator 114 so an, dass dieser in seinen astabilen zweiten Zustand schaltet, sodass über die Antenne 106 eine Kommunikation des Kryptoprozessors 104 mit einem externen Lesegerät 102 möglich ist 306. Dieser Zustand wird für eine vordefinierte Zeitspanne (t_long) gehalten, in der durch das Lesegerät 102 einer Konfiguration des Kryptoprozessors 104 vorgenommen werden kann 307.

Sobald die vordefinierte Zeitspanne ausgelaufen ist setzt der Prozessor 108 einen Marker, dass der Kryptoprozessor konfiguriert wurde (CHIP_INIT=TRUE) 308 und schaltet den Aktivator 114 in seinen ersten Zustand, sodass eine Kommunikation zwischen dem Kryptoprozessor 104 und dem Lesegerät 102 verhindert wird, indem die Antenne abgeschaltet ist 309. Das Dokument 100 geht dann wieder in seinen Ruhemodus über 301. Wird das Dokument 100 erneut aktiviert 302, 303, wird erneut zunächst durch den Prozessor 108 überprüft, ob bereits ein Benutzer des Dokuments 100 festgelegt ist 304. Ist dies noch nicht der Fall, wird anschließend überprüft, ob der Kryptoprozessor 104 bereits konfiguriert wurde 305.

Wird dabei festgestellt, dass der Kryptoprozessor 104 bereits konfiguriert wurde, wird anschließend eine Registrierungsprozedur (FP Enrollment Procedure) angestoßen 310. Hierzu steuert der Mikroprozessor 108 den Fingerabdrucksensor 110 an, um den Fingerabdruck eines Benutzers des Dokuments 100 einzulesen. Der so ermittelte Fingerabdruck des Benutzers des Dokuments 100 wird dann durch den Mikroprozessor 108 in den Speichermitteln 112 als Referenzfingerabdruck hinterlegt. Anschließend setzt die Mikroprozessorschaltung 108 einen Marker, dass das Dokument 100 bereits auf einen Benutzer registriert wurde (FP_ENROLLED=TRUE) 311. Anschließend geht das Dokument 100 wieder in den Ruhemodus über 301.

Wird das Dokument 100 erneut aktiviert 302, 303, wird erneut zunächst überprüft, ob das Dokument 100 auf einen Benutzer registriert ist 304. Ist dies der Fall, überprüft der Mikroprozessor 108, ob der durch den Fingerabdrucksensor 110 erfasste der Fingerabdruck eines Benutzers des Dokuments 100 mit dem Referenzfingerabdruck übereinstimmt, welcher in den Speichermitteln 112 hinterlegt ist 312. Ist dies der Fall, steuert die Mikroprozessorschaltung den Aktivator 114 so an, dass er in dessen zweiten Zustand übergeht und dabei die Antenne 106 aktiviert 313, sodass der Kryptoprozessor 104 über die Antenne 106 mit einem Lesegerät 102 kommunizieren kann. Dabei kann vorgesehen sein, dass der Aktivator 114 für eine kurze vordefinierte Zeitspanne (t_short) in diesem zweiten Zustand verbleibt 314 und anschließend in seinem stabilen ersten Zustand zurückkehrt. Hierdurch wird die Antenne 106 abgeschaltet 315.

Wurde zuvor jedoch festgestellt, dass der über den Fingerabdrucksensor 110 ermittelte Fingerabdruck nicht mit dem Fingerabdruck, welcher in den Speichermitteln 112 hinterlegt ist, übereinstimmt, bricht die Mikroprozessorschaltung 108 das Verfahren an dieser Stelle ab und versetzt das Dokument wieder in den Ruhemodus 301.

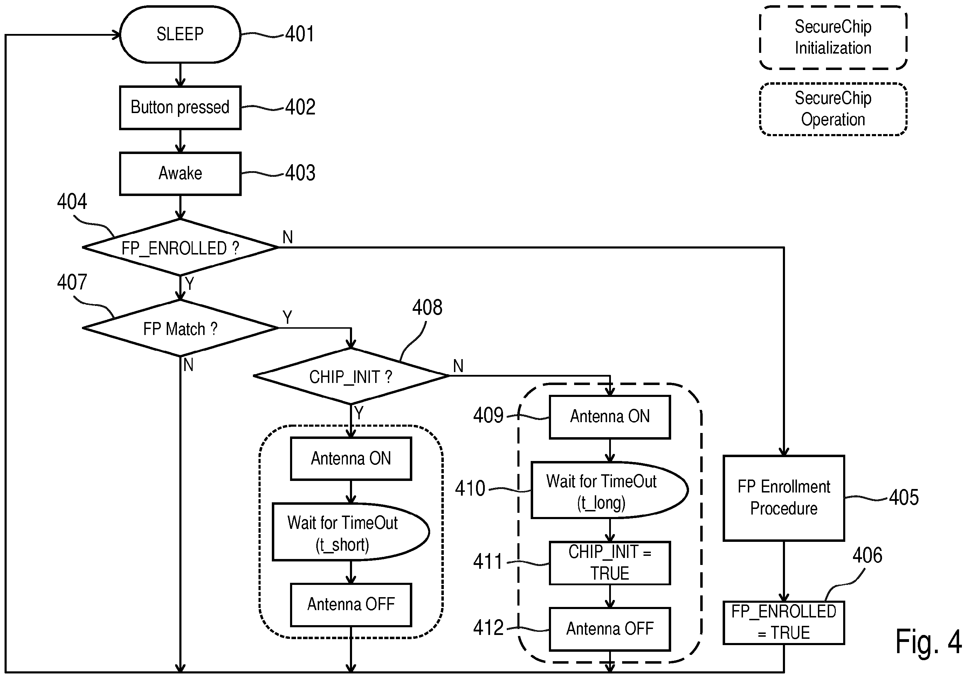

Die Figur 4 ist ein Flussdiagramm eines alternativen Initialisierungsvorgangs für ein Dokument 100. Analog zu dem in Figur 3 dargestellten Verfahren wird dabei das Dokument 100 zunächst ausgehend von einem Ruhezustand 401 beispielsweise durch Betätigung eines Druckschalters 402 aus dem Ruhezustand in einen aktiven Zustand überführt 403.

Anschließend wird überprüft, ob das Dokument 100 bereits auf einen Benutzer durch Speicherung eines Identifikationsmerkmals registriert wurde 404 (FP_ENROLLED?). Ist dies nicht der Fall wird anschließend die Registrierungsprozedur angestoßen 405, welche analog zu Schritt 310 der Figur 3 verläuft. Anschließend wird nach erfolgter Registrierung ein Marker gesetzt, dass das Dokument 100 auf einen Benutzer registriert wurde 406 (FP_ENROLLED=TRUE). Das Dokument 100 geht anschließend wieder in den Ruhezustand 401 über. Wird das Dokument 100 erneut aktiviert 402, 403, wird anschließend erneut geprüft, ob das Dokument 100 auf einen Benutzer registriert ist.

Wird hierbei ermittelt, dass bereits ein Identifikationsmerkmal eines Benutzers hinterlegt wurde, wird anschließend überprüft, ob das Identifikationsmerkmal des aktuellen Benutzers des Dokuments 100 mit jenem Identifikationsmerkmal übereinstimmt, welches während der Registrierung in den Speichermitteln 112 des Dokuments 100 hinterlegt wurde 407 (FP_MATCH?). Wenn dies nicht der Fall ist, bricht die Prozedur ab und das Dokument geht wieder in den Ruhezustand 401 über. Stimmt jedoch das Identifikationsmerkmal des aktuellen Benutzers des Dokuments 100 mit dem in den Speichermitteln 112 hinterlegten Identifikationsmerkmal überein, wird anschließend überprüft, ob der erste Prozessor 104 des Dokuments 100 bereist initialisiert wurde 408 (CHIP_INIT?).

Wenn dies nicht der Fall ist wird die Antenne 106 des Dokuments 100 aktiviert 409 und für eine Zeitspanne t_long aktiv gehalten 410. Während dieser Zeitspanne kann der Kryptoprozessor 104 des Dokuments 100 eingerichtet werden. Sobald die Zeitspanne t_long verstrichen und der Kryptoprozessor 104 entsprechend eingerichtet ist, wird ein Marker gesetzt, der anzeigt, dass der Kryptoprozessor 104 erfolgreich initialisiert wurde (CHIP_INIT=TRUE). Anschließend wird die Antenne 106 wieder deaktiviert 412 und die das Dokument 100 geht wieder in den Ruhemodus 401 über.

Der weitere Betrieb des Dokuments 100, nachdem ein Benutzer registriert und der Kryptoprozessor 104 konfiguriert wurde, verläuft analog zu den Verfahrensschritten 313, 314 und 315, welche mit Bezug auf Figur 3 beschrieben wurden.

Aufgrund der Überprüfung der Identität des Nutzers des Dokuments 100, welcher die Konfiguration des Kryptoprozessors 104 vornimmt, kann durch das in Figur 4 dargestellte Initialisierungsverfahren eine zusätzliche Sicherheitsstufe realisiert werden, da nur die Person die Funktionalität des Dokuments 100 verändern kann, auf die das Dokument 100 registriert wurde.

### Bezugszeichenliste

- 100: Dokument
- 102: Lesegerät
- 104: Kryptoprozessor
- 106: Antenne
- 108: Mikroprozessorschaltung
- 110: Fingerabdrucksensor
- 112: Speichermittel
- 114: Aktivator
- 116: Energiequelle
- 118: kryptographische Schaltung
- 120: Antenne
- 122: geschützter Speicherbereich
- 124: Ausnehmung

## Patentansprüche

1. Dokument (100) mit Sensormitteln (110), mindestens einer Antenne (106), einem ersten Prozessor (104), einem zweiten Prozessor (108), Speichermitteln (112) und einem Schalter (114),
• wobei der erste Prozessor (104) dazu ausgebildet ist, über die Antenne (106) mit einem Lesegerät (102) zu kommunizieren,
• wobei der Schalter (114) dazu ausgebildet ist, die Antenne (106) zwischen einem ersten stabilen Zustand, in dem eine Kommunikation zwischen erstem Prozessor (104) und externem Lesegerät (102) verhindert wird und einem zweiten astabilen Zustand, in dem eine Kommunikation zwischen erstem Prozessor (104) und externem Lesegerät (102) möglich ist, umzuschalten,
• wobei die Sensormittel (110) dazu ausgebildet sind, ein erstes Identifikationsmerkmal eines Benutzers des Dokuments (100) zu erfassen,
• wobei der zweite Prozessor (108) dazu ausgebildet ist, das erste Identifikationsmerkmal mit einem zweiten Identifikationsmerkmal zu vergleichen, wobei der zweite Prozessor (108) ferner dazu ausgebildet ist, bei Übereinstimmung zwischen dem ersten Identifikationsmerkmal und dem zweiten Identifikationsmerkmal den Schalter (114) in den zweiten Zustand zu schalten, **dadurch gekennzeichnet, dass** das zweite Identifikationsmerkmal in den Speichermitteln (112) gespeichert ist und das Dokument (100) ein zweites Speichermittel mit einem geschützten Speicherbereich (122) zur Speicherung mindestens eines Attributs umfasst, wobei der erste Prozessor (104) dem Lesegerät (102) das mindestens eine Attribut ausschließlich nach erfolgreicher Überprüfung einer kryptographischen Zugangsbedingung über die Antenne (106) übermittelt.

2. Dokument (100) nach Anspruch 1, wobei es sich bei dem Identifikationsmerkmal um ein biometrisches Merkmal des Benutzers handelt.

3. Dokument (100) nach einem der Ansprüche 1 oder 2, wobei der zweite Prozessor (108) dazu ausgebildet ist, bei Übereinstimmung des ersten Identifikationsmerkmals und des zweiten Identifikationsmerkmals den Schalter (114) so lange in dem zweiten Zustand zu halten, wie das Identifikationsmerkmal erfasst wird.

4. Dokument (100) nach einem der Ansprüche 1 oder 2, wobei der zweite Prozessor (108) dazu ausgebildet ist, nach Feststellung der Übereinstimmung des ersten Identifikationsmerkmal und des zweiten Identifikationsmerkmals den Schalter (114) für eine vordefinierte Zeitspanne in dem zweiten Zustand zu halten.

5. Dokument (100) nach einem der vorigen Ansprüche, wobei das Dokument (100) ferner eine Batterie (116) umfasst, wobei die Batterie (116) dazu ausgebildet ist den zweiten Prozessor (108) und die Sensormittel (112) mit Energie zu versorgen.

6. Dokument (100) nach einem der vorigen Ansprüche, wobei das Dokument (100) ferner eine Kontaktschnittstelle umfasst, wobei die Kontaktschnittstelle dazu ausgebildet ist den zweiten Prozessor (108) und die Sensormittel (110) mit Energie zu versorgen.

7. Dokument (100) nach einem der vorigen Ansprüche 5 oder 6, wobei das Dokument (100) ferner ein Aktivierungselement umfasst, wobei das Aktivierungselement dazu ausgebildet ist bei Betätigung die Energieversorgung des zweiten Prozessors (108) und der Sensormittel (110) einzuschalten.

8. Dokument (100) nach einem der vorigen Ansprüche, wobei es sich bei dem Identifikationsmerkmal um einen Fingerabdruck handelt.

9. Dokument (100) nach einem der vorigen Ansprüche, wobei der Dokumentenkörper des Dokuments (100) mindestens eine Abbildung eines optischen Identifikationsmerkmals des Benutzers des Dokuments aufweist.

10. Dokument (100) nach einem der vorigen Ansprüche, wobei der Dokumentenkörper des Dokuments (100) mehrschichtig aufgebaut ist, wobei die Schichten aus Papier und/oder Kunststoff bestehen, wobei in dem Dokumentenkörper eine Ausnehmung (124) zur Aufnahme der Sensormittel (110) vorgesehen ist.

11. Dokument (100) nach einem der vorigen Ansprüche, wobei die Antenne (106) dazu ausgebildet ist, eine von dem Lesegerät (102) empfangene elektromagnetische Strahlung in elektrische Energie umzusetzen, wobei die Antenne (106) ferner dazu ausgebildet ist, den ersten Prozessor (104) mit elektrischer Energie zu versorgen, wenn der Schalter im zweiten Zustand ist.

12. Dokument (100) nach Anspruch 11, wobei die Antenne (106) ferner dazu ausgebildet ist, eine Batterie (116), welche dazu ausgebildet ist, den zweiten Prozessor (108) mit Energie zu versorgen, mit elektrischer Energie aufzuladen, wenn der Schalter (114) im zweiten Zustand ist.

13. Verfahren zur Initialisierung eines Dokuments (100) nach einem der vorhergehenden Ansprüche mit folgenden Schritten:
• Schalten der Antenne (106) in den zweiten Zustand,
• Konfigurieren des ersten Prozessors (104) durch das Lesegerät (102),
• Schalten der Antenne (106) in den ersten Zustand,
• Erfassen eines Identifikationsmerkmals des Benutzers des Dokuments (100) durch die Sensormittel (110),
• Speichern des erfassten Identifikationsmerkmals als zweites Identifikationsmerkmal in den Speichermitteln (112) durch den zweiten Prozessor (108).

14. Verfahren zur Initialisierung eines Dokuments (100) nach einem der vorhergehenden Ansprüche 1-12 mit folgenden Schritten:
• Erfassen eines Identifikationsmerkmals des Benutzers des Dokuments (100) durch die Sensormittel (110),
• Speichern des erfassten Identifikationsmerkmals als zweites Identifikationsmerkmal in den Speichermitteln (112) durch den zweiten Prozessor (108),
• Erfassen eines ersten Identifikationsmerkmals des Benutzers des Dokuments (100) durch die Sensormittel (110),
• Vergleichen des ersten Identifikationsmerkmals mit dem zweiten Identifikationsmerkmal durch den zweiten Prozessor (108),
• Bei Übereinstimmung zwischen dem ersten Identifikationsmerkmal und dem zweiten Identifikationsmerkmal Schalten des Schalters (114) in den zweiten Zustand durch den zweiten Prozessor (108),
• Konfigurieren des ersten Prozessors (104) durch das Lesegerät (102),
• Schalten der Antenne (106) in den ersten Zustand.

15. Zugangskontrollsystem welches mindestens ein Dokument (100) nach einem der Ansprüche 1-12 sowie mindestens ein Lesegerät (102) und eine Zugangskontrollvorrichtung umfasst, wobei das Lesegerät (102) dazu ausgebildet ist, mit dem Dokument (100) zu kommunizieren, wobei das Dokument (100) nach erfolgreicher Überprüfung einer kryptographischen Zugangsbedingung dem Lesegerät (102) das mindestens eine Attribut übermittelt, wobei das Lesegerät (102) dazu ausgebildet ist, das von dem Dokument (100) empfangene Attribut mit einem Referenzattribut zu vergleichen, wobei das Lesegerät (102) ferner dazu ausgebildet ist bei Übereinstimmung des empfangenen Attributs mit dem Referenzattribut die Zugangskontrollvorrichtung in einen Freigabezustand zu schalten.

## Claims

1. A document (100), comprising sensor means (110), at least one antenna (106), a first processor (104), a second processor (108), storage means (112), and a switch (114),
• the first processor (104) being designed to communicate with a reading device (102) via the antenna (106);
• the switch (114) being designed to switch the antenna (106) between a stable first state, in which communication between the first processor (104) and the external reading device (102) is prevented, and an unstable second state, in which communication between the first processor (104) and the external reading device (102) is possible;
• the sensor means (110) being designed to detect a first identification feature of a user of the document (100); and
• the second processor (108) being designed to compare the first identification feature to a second identification feature, the second processor (108) furthermore being designed to switch the switch (114) to the second state when the first identification feature matches the second identification feature,
**characterized in that** the second identification feature is stored in the storage means (112), and the document (100) comprises a second storage means including a protected memory area (122) for storing at least one attribute, the first processor (104) only transmitting the at least one attribute to the reading device (102), via the antenna (106), after a successful check of a cryptographic access condition.

2. The document (100) according to claim 1, wherein the identification feature is a biometric feature of the user.

3. The document (100) according to either claim 1 or 2, wherein the second processor (108) is designed to keep the switch (114) in the second state as long as the identification feature is being detected when the first identification feature matches the second identification feature.

4. The document (100) according to either claim 1 or 2, wherein the second processor (108) is designed to keep the switch (114) in the second state for a pre-defined time period after establishing that the first identification feature matches the second identification feature.

5. A document (100) according to any one of the preceding claims, wherein the document (100) furthermore comprises a battery (116), the battery (116) being designed to supply the second processor (108) and the sensor means (112) with energy.
111

6. A document (100) according to any one of the preceding claims, wherein the document (100) furthermore comprises a contact interface, the contact interface being designed to supply the second processor (108) and the sensor means (110) with energy.

7. A document (100) according to either the preceding claim 5 or 6, wherein the document (100) furthermore comprises an activation element, the activation element being designed to switch on the energy supply for the second processor (108) and the sensor means (110) when actuated.

8. A document (100) according to any one of the preceding claims, wherein the identification feature is a fingerprint.

9. A document (100) according to any one of the preceding claims, wherein the body of the document (100) includes at least one rendering of a visual identification feature of the user of the document.

10. A document (100) according to any one of the preceding claims, wherein the body of the document (100) has a multi-layer composition, the layers being made of paper and/or plastic, a recess (124) for receiving the sensor means (110) being provided in the document body.

11. A document (100) according to any one of the preceding claims, wherein the antenna (106) is designed to convert electromagnetic radiation received from the reading device (102) into electrical energy, the antenna (106) furthermore being designed to supply the first processor (104) with electrical energy when the switch is in the second state.

12. The document (100) according to claim 11, wherein the antenna (106) is furthermore designed to charge a battery (116), which is designed to supply the second processor (108) with energy, with electrical energy when the switch (114) is in the second state.

13. A method for initializing a document (100) according to any one of the preceding claims, comprising the following steps:
• switching the antenna (106) to the second state;
• configuring the first processor (104) by way of the reading device (102);
• switching the antenna (106) to the first state;
• detecting an identification feature of the user of the document (100) by way of the sensor means (110);
• storing the detected identification feature as a second identification feature in the storage means (112) by way of the second processor (108).

14. A method for initializing a document (100) according to any one of the preceding claims 1 to 12, comprising the following steps:
• detecting an identification feature of the user of the document (100) by way of the sensor means (110);
• storing the detected identification feature as a second identification feature in the storage means (112) by way of the second processor (108);
• detecting a first identification feature of the user of the document (100) by way of the sensor means (110);
• comparing the first identification feature to the second identification feature by way of the second processor (108);
• switching the switch (114) to the second state, by way of the second processor (108), when the first identification feature matches the second identification feature;
• configuring the first processor (104) by way of the reading device (102); and
• switching the antenna (106) to the first state.

15. An access control system, comprising at least one document (100) according to any one of claims 1 to 12 as well as at least one reading device (102) and an access control device, the reading device (102) being designed to communicate with the document (100), the document (100), following a successful check of a cryptographic access condition, transmitting the at least one attribute to the reading device (102), the reading device (102) being designed to compare the attribute received from the document (100) to a reference attribute, and the reading device (102) furthermore being designed to switch the access control device to a release state when the received attribute matches the reference attribute.

## Revendications

1. Document (100) muni de moyens de détection (110), d'au moins une antenne (106), d'un premier processeur (104), d'un deuxième processeur (108), de moyens d'enregistrement (112) et d'un commutateur (114),
• dans lequel le premier processeur (104) est conçu pour communiquer avec un lecteur (102) par le biais de l'antenne (106),
• dans lequel le commutateur (114) est conçu pour commuter l'antenne (106) entre un premier état stable, dans lequel une communication entre le premier processeur (104) et le lecteur (102) externe est empêchée, et un deuxième état instable, dans lequel une communication entre le premier processeur (104) et le lecteur (102) externe est possible,
• dans lequel les moyens de détection (110) sont conçus pour détecter une première caractéristique d'identification d'un utilisateur du document (100),
• dans lequel le deuxième processeur (108) est conçu pour comparer la première caractéristique d'identification avec une deuxième caractéristique d'identification, où le deuxième processeur (108) est en outre conçu, lors d'une concordance entre la première caractéristique d'identification et la deuxième caractéristique d'identification, pour commuter le commutateur (114) dans le deuxième état,
**caractérisé en ce que** la deuxième caractéristique d'identification est stockée dans les moyens d'enregistrement (112) et le document (100) comprend un deuxième moyen d'enregistrement avec une zone de mémoire protégée (122) pour le stockage d'au moins un attribut, où le premier processeur (104) transmet au lecteur (102) l'au moins un attribut exclusivement après une vérification réussie d'une condition d'accès cryptographique par le biais de l'antenne (106).

2. Document (100) selon la revendication 1, dans lequel, dans le cas de la caractéristique d'identification, il s'agit d'une caractéristique biométrique de l'utilisateur.

3. Document (100) selon l'une des revendications 1 ou 2, dans lequel le deuxième processeur (108) est conçu, lors d'une concordance de la première caractéristique d'identification et de la deuxième caractéristique d'identification, pour maintenir le commutateur (114) dans le deuxième état aussi longtemps que la caractéristique d'identification est détectée.

4. Document (100) selon l'une des revendications 1 ou 2, dans lequel le deuxième processeur (108) est conçu, après le constat de la concordance de la première caractéristique d'identification et de la deuxième caractéristique d'identification, pour maintenir le commutateur (114) dans le deuxième état pendant un intervalle de temps prédéfini.

5. Document (100) selon l'une des revendications précédentes, où le document (100) comprend en outre une batterie (116), où la batterie (116) est conçue pour alimenter le deuxième processeur (108) et les moyens de détection (112) avec de l'énergie.

6. Document (100) selon l'une des revendications précédentes, où le document (100) comprend en outre une interface de contact, où l'interface de contact est conçue pour alimenter le deuxième processeur (108) et les moyens de détection (110) avec de l'énergie.

7. Document (100) selon l'une des revendications précédentes 5 ou 6, où le document (100) comprend en outre un élément d'activation, où l'élément d'activation est conçu, lors de l'actionnement, pour mettre en marche l'alimentation en énergie du deuxième processeur (108) et des moyens de détection (110).

8. Document (100) selon l'une des revendications précédentes, dans lequel, dans le cas de la caractéristique d'identification, il s'agit d'une empreinte digitale.

9. Document (100) selon l'une des revendications précédentes, dans lequel le corps de document du document (100) présente au moins une représentation d'une caractéristique d'identification optique de l'utilisateur du document.

10. Document (100) selon l'une des revendications précédentes, dans lequel le corps de document du document (100) est structuré en plusieurs couches, où les couches sont constituées de papier et/ou de matière plastique, où une cavité (124) est prévue dans le corps de document pour la réception des moyens de détection (110).

11. Document (100) selon l'une des revendications précédentes, dans lequel l'antenne (106) est conçue pour transformer un rayonnement électromagnétique reçu par le lecteur (102) en énergie électrique, où l'antenne (106) est en outre conçue pour alimenter le premier processeur (104) en énergie électrique lorsque le commutateur est dans le deuxième état.

12. Document (100) selon la revendication 11, dans lequel l'antenne (106) est en outre conçue pour charger une batterie (116), laquelle est conçue pour alimenter le deuxième processeur (108) en énergie, pour recharger de l'énergie électrique lorsque le commutateur (114) est dans le deuxième état.

13. Procédé d'initialisation d'un document (100) selon l'une des revendications précédentes avec les étapes suivantes :
• commutation de l'antenne (106) dans le deuxième état,
• configuration du premier processeur (104) par le lecteur (102),
• commutation de l'antenne (106) dans le premier état,
• détection d'une caractéristique d'identification de l'utilisateur du document (100) par les moyens de détection (110),
• stockage de la caractéristique d'identification détectée sous forme de deuxième caractéristique d'identification dans les moyens d'enregistrement (112) par le deuxième processeur (108).

14. Procédé d'initialisation d'un document (100) selon l'une des revendications précédentes 1 à 12 avec les étapes suivantes :
• détection d'une caractéristique d'identification de l'utilisateur du document (100) par les moyens de détection ((110),
• stockage de la caractéristique d'identification détectée sous forme de deuxième caractéristique d'identification dans les moyens d'enregistrement (112) par le deuxième processeur (108),
• détection d'une première caractéristique d'identification de l'utilisateur du document (100) par les moyens de détection (110),
• comparaison de la première caractéristique d'identification avec la deuxième caractéristique d'identification par le deuxième processeur (108),
• dans le cas d'une concordance entre la première caractéristique d'identification et de la deuxième caractéristique d'identification, commutation du commutateur (114) dans le deuxième état par le deuxième processeur (108),
• configuration du premier processeur (104) par le lecteur (102),
• commutation de l'antenne (106) dans le premier état.

15. Système de commande d'accès, lequel comprend au moins un document (100) selon l'une des revendications 1 à 12, ainsi qu'au moins un lecteur (102) et un dispositif de commande d'accès, dans lequel le lecteur (102) est conçu pour communiquer avec le document (100), dans lequel le document (100), après la vérification réussie d'une condition d'accès cryptographique, transmet l'au moins un attribut au lecteur (102), dans lequel le lecteur (102) est conçu pour comparer l'attribut reçu à partir du document (100) avec un attribut de référence, dans lequel le lecteur (102) est en outre conçu pour, lors de la concordance de l'attribut reçu avec l'attribut de référence, commuter le dispositif de commande d'accès dans un état de libération.
